# FASCICULE DE BREVET EUROPEEN

(11) **EP 2 245 722 B1**
(45) Date de publication et mention de la délivrance du brevet: **22.02.2012**
(21) Numéro de dépôt: 09712277.4
(22) Date de dépôt: 16.02.2009
(51) Int. Cl.: H02K 1/20

(54) **STATOR DE MACHINE ELECTRIQUE TOURNANTE**
STATOR FÜR ELEKTRISCHE DREHMASCHINEN
STATOR FOR ROTARY ELECTRIC MACHINE

(30) Priorité: 20.02.2008 FR 0851095
(43) Date de publication de la demande: 03.11.2010
(73) Titulaire: Moteurs Leroy Somer, 16000 Angouleme (FR)
(72) Inventeur: DUTAU, Alexis, F-16000 Angouleme (FR); SAINT-MICHEL, Jacques, F-16000 Angouleme (FR)
(74) Mandataire: Tanty, François
(86) Numéro de dépôt international: PCT/FR2009/050243
(87) Numéro de publication internationale: WO 2009/103924

(56) Documents cités:
- WO-A-2005/022718
- JP-A- 11 004 554
- SU-A1- 437 176
- US-A- 2 818 515
- US-A- 5 331 238

## Description

La présente invention concerne une machine électrique tournante et plus particulièrement une nouvelle structure de stator destinée à améliorer son refroidissement.

Le brevet US 5 331 238 divulgue un stator comportant à sa périphérie des bossages ménageant entre eux des passages pour la circulation d'un fluide de refroidissement.

Le brevet US 4 912 350 décrit un stator comportant des tôles pourvues d'ouvertures pour le passage d'un flux d'air de refroidissement. Deux tôles adjacentes sont décalées angulairement.

Le brevet US 2 818 515 décrit un stator comportant des sous-ensembles de tôles définissant des canaux pour le passage de l'air, ces sous-ensembles étant décalés angulairement. Un flux d'air important peut circuler hors des canaux, dans l'espace ménagé entre les tôles et la carcasse du stator.

La demande WO 2005/022718 A1 divulgue un stator pourvu d'ailettes de refroidissement. JP 11004554 également.

L'invention vise à perfectionner encore les machines électriques tournantes, en proposant selon l'un de ses aspects un stator de machine électrique tournante selon la revendication 1 comportant une carcasse et un paquet de tôles statoriques disposé à l'intérieur de la carcasse, des sous-ensembles de tôles du paquet comportant des extensions parcourues par des canaux de circulation d'un fluide de refroidissement, ces sous-ensembles étant disposés de telle sorte que le fluide circulant le long du paquet subisse une succession de passages à l'intérieur des canaux et de passages dans des zones élargies s'étendant entre les canaux.

Pour une extension au moins, mieux la majorité, voire la totalité des extensions d'un sous-ensemble, la section de passage offerte à l'écoulement du fluide de refroidissement au sein de l'extension est supérieure à celle définie par l'espace s'étendant radialement entre l'extension et la carcasse.

Le paquet de tôles est ainsi agencé de telle sorte que la majorité du fluide de refroidissement passe dans les canaux et les zones élargies. Autrement dit, seule une faible proportion du fluide de refroidissement passe dans l'intervalle éventuel s'étendant radialement entre les extensions et la carcasse, par exemple moins de 40%, mieux moins de 30%, 20%, 10%, 5% ou 1 %, cet intervalle étant par exemple limité à un jeu de 1 à 2 mm, et servant par exemple à accueillir l'épaisseur de soudures réalisées sur le paquet de tôles.

Chaque extension comporte une pluralité d'ailettes, les canaux étant formés entre ces ailettes. Au moins deux d'entre elles sont reliées par une liaison périphérique.

Grâce à l'invention, le refroidissement de la machine est amélioré sans pour autant que la construction du stator soit rendue beaucoup plus complexe.

Le fluide de refroidissement peut être, grâce à l'invention, forcé de circuler à travers les canaux et de subir des transitions canaux/zones élargies, favorables à une bonne dissipation thermique.

Globalement, plus de la moitié du fluide de refroidissement peut être forcé à circuler dans les canaux de deux sous-ensembles consécutifs, mieux plus de 60%, encore mieux plus de 70%, voire plus de 80%, 90%, 95% ou 99%.

Le ratio *hauteur en saillie des extensions d*/*longueur des canaux l* peut être compris entre 0,025 et 25, mieux 0,1 et 5. On peut avoir par exemple l/d ≥ 0,5.

La longueur d'une extension au moins, mieux d'une pluralité, voire de chaque extension, mesurée selon l'axe de rotation de la machine, peut être supérieure à la distance de laquelle cette extension fait saillie par rapport aux zones élargies, dans des exemples de mise en oeuvre de l'invention. Une faible hauteur relative des extensions permet de ne pas trop affecter l'homogénéité magnétique du paquet de tôles.

Les zones élargies peuvent être ouvertes sur la carcasse de machine dans laquelle est logé le paquet de tôles.

Les extensions des sous-ensembles peuvent être disposées en quinconce selon un agencement régulier.

Comme mentionné ci-dessus, le paquet de tôles comporte une pluralité d'ailettes, lesquelles peuvent s'étendre radialement, les canaux étant formés entre ces ailettes. Ladite pluralité d'ailettes peut, par extension, comporter au moins deux ailettes, notamment entre cinq et cinquante ailettes.

L'efficacité des ailettes (ratio de la surface d'échange effective à la surface apparente) est de préférence supérieure ou égale à 50 %.

Les ailettes entre lesquelles des canaux sont formés sont réunies au moins pour certaines par des liaisons périphériques, ces liaisons périphériques peuvent avoir sensiblement la même épaisseur. Les liaisons périphériques peuvent être en forme d'arcs. Les liaisons périphériques peuvent venir au contact de la carcasse, notamment d'une surface cylindrique, de révolution de celle-ci. La présence des liaisons périphériques améliore encore le refroidissement.

Le ratio *largeur du canal*/*épaisseur de l'ailette contiguë à ce canal* peut être supérieur ou égal à 2, mieux 3.

Les tôles du paquet peuvent être identiques, ce qui simplifie la fabrication et l'assemblage.

Chaque sous-ensemble peut comporter plusieurs, notamment quatre, extensions. Ces extensions peuvent être disposées à 90° les unes des autres.

Chaque extension peut comporter une encoche permettant le passage d'un barreau de maintien des tôles du paquet. Le barreau peut être soudé sur les tôles du paquet. L'encoche peut accueillir au moins une ailette. Le barreau précité peut être disposé d'un côté de cette ailette.

Chaque extension peut comporter, de part et d'autre des canaux, des ailettes libres, notamment au moins deux ailettes libres, par exemple trois ailettes libres, augmentant la surface d'échange thermique.

Les ailettes libres peuvent présenter une hauteur qui décroît en éloignement des canaux, afin de ne pas augmenter la largeur de la bande de tôle magnétique dans laquelle les tôles stator sont découpées.

Chaque extension peut s'étendre angulairement sur un secteur angulaire compris entre 30 et 60°, autour de l'axe de rotation de la machine.

La section de passage offerte au flux du fluide de refroidissement entre la carcasse et le stator peut être supérieure ou égale à 60 % de la section qui existerait en l'absence des extensions, c'est-à-dire dans l'espace annulaire existant entre le paquet de tôles sans les extensions, mais avec les barreaux éventuels, et la carcasse. Ainsi, le débit de fluide de refroidissement reste relativement important, ce qui peut permettre de refroidir les têtes de bobines.

La longueur, suivant l'axe de rotation de la machine, d'un sous-ensemble peut être comprise entre 1 et 20 fois, mieux de 5 à 10 fois, le diamètre hydraulique des canaux.

Les canaux peuvent être formés par découpage des tôles.

Le fluide de refroidissement peut être de l'air.

Les canaux peuvent être formés par découpage des tôles.

Le fluide de refroidissement peut être de l'air.

La dimension, suivant l'axe de rotation de la machine, d'une zone élargie peut être sensiblement égale à celle des canaux d'un sous-ensemble adjacent.

Chaque zone élargie peut être définie au moins partiellement par une surface cylindrique de révolution du paquet de tôles, d'étendue angulaire par exemple supérieure ou égale à 30 ou 60° autour de l'axe de rotation de la machine.

Chaque sous-ensemble peut comporter au moins deux tôles superposées.

Le nombre de sous-ensembles peut être compris entre 2 et 1000.

Les sous-ensembles du paquet de tôles comportent des canaux délimités par des bords radialement intérieurs situés à des distances différentes de l'axe du stator, les bords situés angulairement en face des dents du stator étant plus rapprochés de l'axe que ceux situés en face des encoches.

Les canaux délimités radialement à l'intérieur par les bords les plus éloignés de l'axe peuvent être ouverts radialement vers la culasse, tandis que ceux délimités par les bords les plus rapprochés de l'axe peuvent être fermés radialement par des portions de tôle, notamment des liaisons périphériques reliant des ailettes. De préférence, la section de passage offerte au fluide de refroidissement est sensiblement égale pour deux canaux consécutifs d'une extension.

Le paquet de tôles peut comporter des encoches qui viennent dans la continuité des bords des canaux radialement les plus rapprochés de l'axe, lors de la disposition en quinconce des sous-ensembles du paquet de tôles.

Est encore décrit, une tôle statorique pour machine tournante électrique, comportant une culasse magnétique, des dents et encoches réalisées du côté radialement intérieur de la culasse et des canaux de refroidissement du côté radialement extérieur de la culasse, notamment des canaux formés entre des ailettes, les canaux étant situés pour certains en face des dents et pour d'autres en face des encoches, les canaux situés en face des dents ayant un bord radialement intérieur moins éloigné du centre de la tôle que les canaux situés en face des encoches, les canaux situés en face des dents étant de préférence fermés radialement à l'extérieur par des portions de tôle, de préférence des liaisons périphériques reliant des ailettes adjacentes, les canaux situés en face des encoches étant de préférence ouverts sensiblement la même que l'écart entre les rayons des bords radialement intérieurs de deux canaux consécutifs, la tôle comportant de préférence des encoches hors des zones comportant les canaux, ces encoches ayant, une profondeur telle que leur fond se situe sensiblement à la même distance du centre de la tôle que les bords radialement intérieurs des canaux situés en face des dents, l'écart angulaire entre au moins deux encoches consécutives étant de préférence égal à celui existant entre deux canaux consécutifs situés en face de dents du stator, le nombre de liaisons périphériques et le nombre desdites encoches étant par exemple égal à seize.

L'invention pourra être mieux comprise à la lecture de la description détaillée qui va suivre, d'exemples de mise en oeuvre non limitatifs de celle-ci, et à l'examen du dessin annexé, sur lequel :
- la figure 1 représente, en vue de face, une tôle du stator,
- la figure 2 représente, de manière schématique et en perspective, le paquet de tôles statoriques de la machine,
- la figure 3 représente, de manière schématique, le paquet de tôles du stator assemblé et bobiné,
- la figure 4 représente, de manière schématique et en perspective, le stator complet,
- la figure 5 représente partiellement une tôle statorique selon une variante de réalisation, et
- la figure 6 représente un détail de la figure 5.

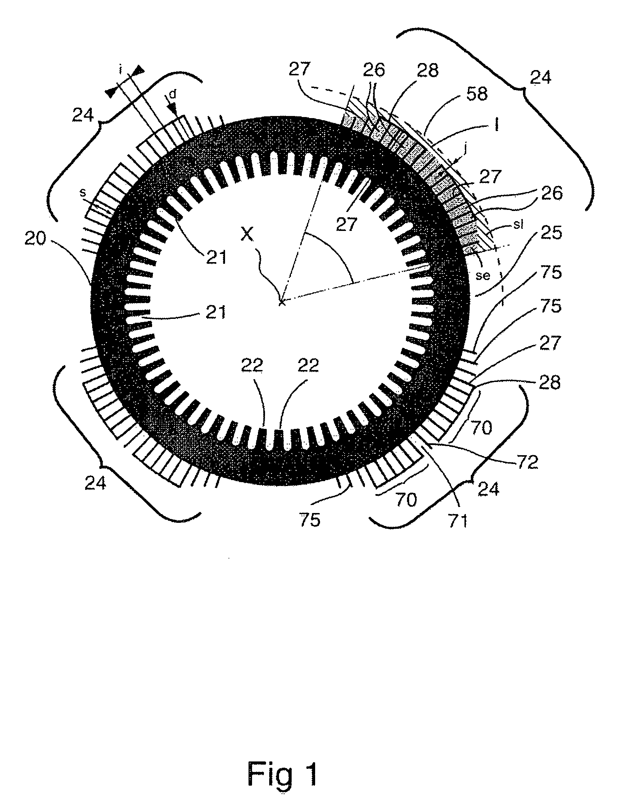

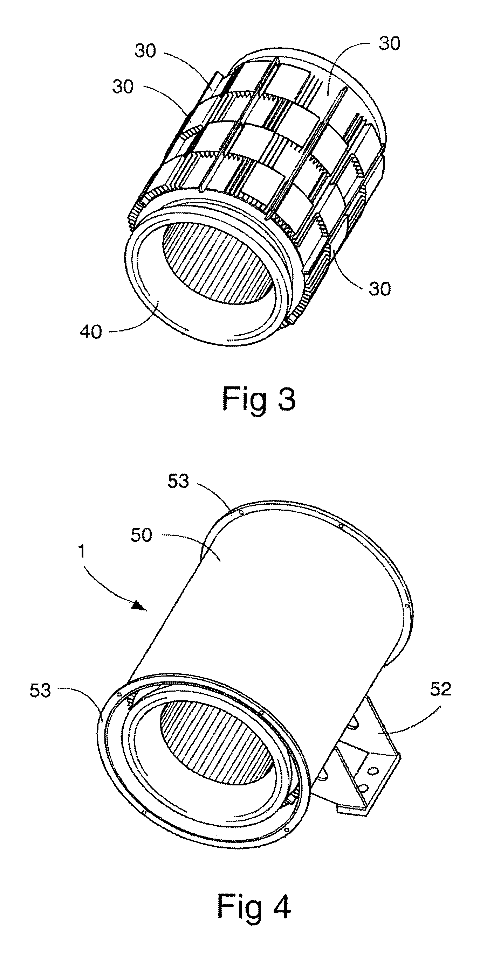

Le stator 1 représenté à la figure 4 comporte un paquet 10 de tôles statoriques, formé par un empilement de tôles magnétiques 20 telles que celle représentée à la figure 1. Ces tôles 20 sont maintenues assemblées en compression selon l'axe X de rotation de la machine par des barreaux 30 que l'on peut voir à la figure 3, qui sont soudés aux tôles 20, comme cela sera précisé dans la suite.

Le stator 1 comporte des enroulements 40 qui sont bobinés dans des encoches 21 ouvertes radialement vers l'intérieur du stator, le nombre de ces encoches dépendant de la polarité de la machine.

Chacune des encoches 21 peut être formée entre deux dents 22 qui peuvent ou non comporter à leur extrémité radialement intérieure un épanouissement polaire.

Dans l'exemple illustré, le stator est à bobinage distribué, mais il pourrait, dans une variante non illustrée, être à bobinage concentré, avec par exemple une bobine individuelle engagée sur chaque dent.

Dans l'exemple considéré, les tôles 20 sont identiques et formées chacune par découpage d'une tôle magnétique.

Toutes les tôles 20 peuvent être découpées séparément et assemblées. En variante, le stator est formé par l'enroulement d'une bande autour de l'axe de rotation de la machine, comme décrit dans le brevet US 7 103 964 de la demanderesse.

Le paquet 10 est logé dans une carcasse 50 qui peut comporter des moyens de fixation 52 sur un bâti, tels que par exemple un socle avec des perçages pour le passage des boulons d'ancrage.

La carcasse 50 peut comporter un corps tubulaire pourvu à ses extrémités de brides 53 pour le montage de flasques destinés à supporter des roulements à l'intérieur desquels tourne l'arbre du rotor de la machine (non représenté).

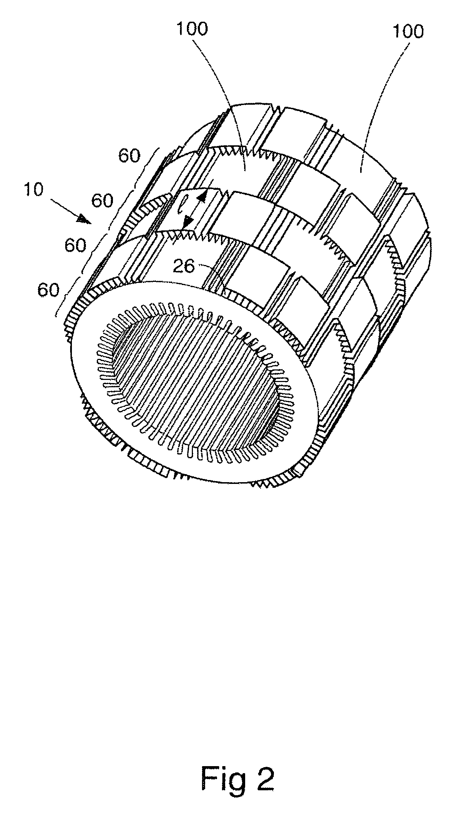

On peut voir à la figure 2 que le paquet 10 est composé d'un empilement de sous-ensembles 60 comportant chacun plusieurs tôles 20 superposées, par exemple entre 2 et 2000 tôles.

Dans l'exemple illustré, le paquet de tôles comporte quatre sous-ensembles 60 dont la dimension 1, mesurée parallèlement à l'axe X de rotation de la machine, est la même d'un sous-ensemble à l'autre. Cette longueur l est par exemple comprise entre 1 et 1500 mm.

Chaque tôle 20 comporte, dans l'exemple considéré, quatre extensions radiales 24 qui s'étendent chacune angulairement autour de l'axe X sur un secteur angulaire α par exemple compris entre 30 et 60°, par exemple de l'ordre de 45°.

Chaque extension 24 s'étend en saillie radialement vers l'extérieur par rapport au contour circulaire 25 de la tôle 20, d'une distance *d* inférieure à *l*, la distance *d* étant par exemple comprise entre 1 et 50 mm.

Des canaux 26 sont formés au sein de chaque extension 24 entre des ailettes 27 qui s'étendent radialement vers l'extérieur, ces ailettes 27 étant réunies à leur extrémité radialement la plus extérieure par des liaisons périphériques 28 qui, dans l'exemple considéré, sont des arcs de cercle centrés sur l'axe X. Toutes ces liaisons 28 viennent en contact avec la surface intérieure 58 de la carcasse ou s'étendent avec un faible jeu à l'intérieur de la carcasse, par exemple un jeu radial *j* inférieur ou égal à 2 mm, dû à la présence de soudures.

La section offerte sₑ au passage de l'air au sein d'une extension 24, en grisé sur la figure 1, est supérieure à celle s_{I} définie par l'espace *I* s'étendant radialement entre l'extension 24 et la surface intérieure de la carcasse 50, hachuré sur la figure 1. On a par exemple s_{I≤0},₄ sₑ, mieux s_{I≤0,3} sₑ, voire s_{I≤0,2} sₑ, s_{I≤0,1}sₑ, s_{I≤0,05}sₑ ou s_{I≤0,01}sₑ.

Les ailettes 27 et les liaisons périphériques 28 peuvent être réalisées par découpage d'une seule pièce avec le reste de la tôle 20.

Le nombre de canaux 26 est par exemple compris entre 2 et 50 pour chaque extension 24.

La dimension radiale s d'une ailette 27 définissant au moins partiellement un canal 26 est par exemple comprise entre 9 et 48 mm.

L'écart angulaire *i* entre deux ailettes 27 adjacentes définissant au moins partiellement un canal 26 est par exemple compris entre 1 et 45°.

Dans l'exemple considéré, chaque extension 24 comporte deux groupes 70 d'ailettes 27 consécutives réunies par des liaisons périphériques 28, ces groupes 70 étant séparés par une encoche 71 divisée en deux par une ailette 72 qui s'étend sensiblement à égale distance des deux groupes 70.

L'encoche 71 sert au passage des barreaux 30 de fixation des tôles 20.

Chaque extension 24 comporte également, dans l'exemple considéré, à l'extérieur des groupes 70, des ailettes libres 75 dont la hauteur décroît au fur et à mesure que l'on s'éloigne des groupes 70.

Dans l'exemple considéré, ces ailettes 75 sont au nombre de trois par groupe 70, leur hauteur décroissant, par exemple depuis une valeur légèrement inférieure à celle des ailettes 27 jusqu'à une hauteur qui est sensiblement égale à la moitié de la hauteur des ailettes 27.

L'écartement entre les ailettes 75 et 27 ou 27 et 72 est par exemple sensiblement constant et égal à *i*.

Au sein d'un même sous-ensemble 60, les tôles 20 se superposent exactement.

Deux sous-ensembles 60 consécutifs sont décalés angulairement, par exemple d'un huitième de tour, de telle sorte que les canaux 26 d'un sous-ensemble 60 débouchent dans une zone élargie 100, hors des canaux 26 du sous-ensemble 60 suivant, eu égard au sens de circulation du fluide de refroidissement.

Cette alternance de circulation dans les canaux 26 et hors des canaux 26 améliore notablement le refroidissement. Le stator 1 peut se trouver muni d'ailettes sur toute sa périphérie et sur toute sa longueur, mais les ailettes sont interrompues, ce qui améliore l'effet convectif. De plus, la disposition en quinconce des sous-ensembles 60 combinée à la faible hauteur relative des extensions, assure des caractéristiques magnétiques relativement homogènes pour l'ensemble du stator.

La hauteur des ailettes 27 ainsi que leur épaisseur sont choisies afin de réaliser le meilleur compromis entre la section de passage du fluide de refroidissement et l'efficacité des ailettes.

De manière générale, plus une ailette est mince, moins elle est efficace à cause de la conductibilité thermique limitée, mais plus le débit du fluide de refroidissement pourra être important, ce fluide qui traverse les canaux 26 servant également à refroidir les têtes de bobines.

De préférence, l'efficacité des ailettes est choisie de façon à être supérieure à 50 % et leur épaisseur est choisie pour avoir une section de passage offerte au fluide de refroidissement qui n'est pas inférieure à 60 % de la section qui existerait en l'absence des extensions.

Le diamètre hydraulique des canaux, qui peut être défini comme étant égal à quatre fois la section de passage divisée par le périmètre mouillé, peut permettre de déterminer le nombre optimal de paquets à disposer en quinconce, qui peut résulter lui-même d'un nouveau compromis entre perte de charge et efficacité thermique.

De préférence, chaque sous-ensemble 60 est suffisamment court pour augmenter significativement le coefficient d'échange moyen, mais les sous-ensembles ne sont de préférence pas trop nombreux de façon à ce que la perte de charge reste admissible et ne diminue pas outre mesure le débit. La longueur de chaque sous-ensemble peut être avantageusement comprise entre 1 et 20 fois, mieux de 5 à 10 fois, le diamètre hydraulique des canaux 26.

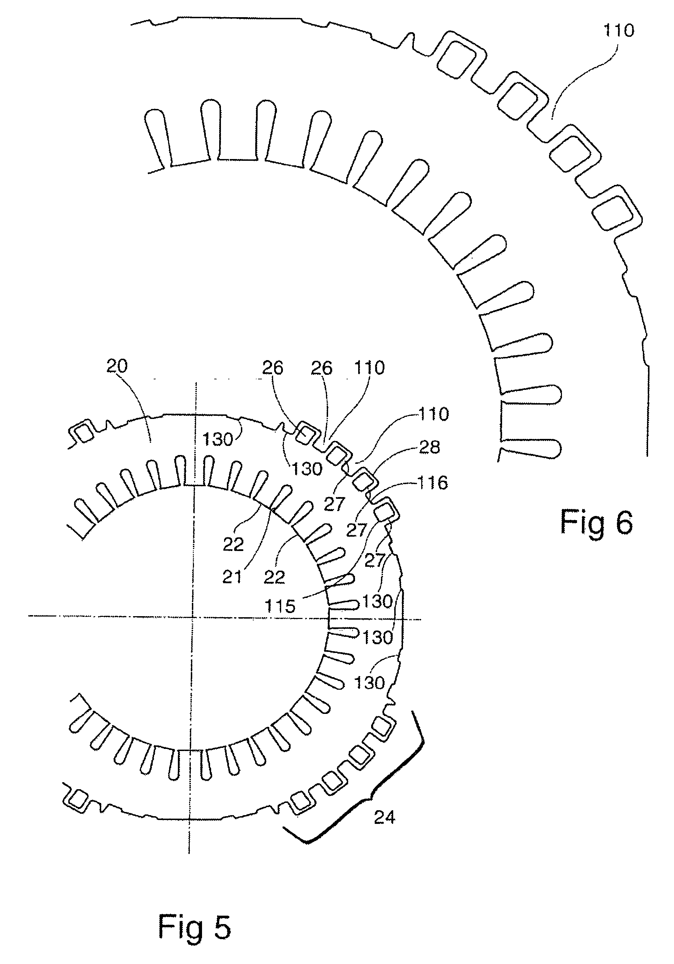

On a représenté aux figures 5 et 6 une tôle statorique 20 selon une variante de mise en oeuvre de l'invention. Cette tôle peut remplacer celle précédemment décrite.

Dans cet exemple, la tôle comporte plusieurs extensions 24, par exemple au nombre de quatre, sensiblement dans les quatre coins. Les extensions 24 font chacune saillie au-delà du.diamètre magnétique moyen de la tôle.

Chaque extension 24 comporte une succession d'ailettes 27 qui sont reliées par groupes de deux par des liaisons périphériques 28, ces dernières alternant avec des espaces libres formés entre les ailettes.

Les canaux 26 présentent des bords 115 et 116 radialement intérieurs qui ne se situent pas tous à la même distance du centre de la tôle 20.

Dans l'exemple illustré, les bords 115 des canaux 26 fermés extérieurement par les liaisons périphériques 28 se situent à une distance moindre du centre que les bords 116 des canaux 26 ouverts radialement vers l'extérieur, en raison des espaces 110 remplaçant les liaisons 28. Les bords 115 les plus proches se situent angulairement dans le prolongement des dents 22 du stator, tandis que les bords 116 se situent angulairement dans le prolongement des encoches 21 et permettent d'avoir une largeur de tôle plus importante. Cette disposition permet d'obtenir la même section de passage pour l'air dans deux canaux consécutifs tout en augmentant la largeur de culasse magnétique en face de chaque encoche et réduit les déséquilibres thermiques dans le paquet de tôles, lesquels pourraient s'avérer préjudiciables au vieillissement des isolants recouvrant les tôles.

La tôle 20 comporte également des encoches 130 situées entre deux extensions consécutives.

Chaque sous-ensemble de tôles 20 se superposant exactement est décalé angulairement par rapport au sous-ensemble adjacent, en raison de la disposition en quinconce des sous-ensembles. Le fond d'une encoche 130 d'un sous-ensemble vient alors dans la continuité d'un bord 115 du sous-ensemble adjacent, ce qui évite la formation d'un décrochement à la sortie des canaux correspondants et réduit la perte de charge.

Bien entendu, l'invention n'est pas limitée aux l'exemples de réalisation qui viennent d'être décrits.

On peut notamment modifier la forme des extensions 24 et celle des canaux 26, lesquels peuvent ne pas être formés entre des ailettes.

La circulation du fluide de refroidissement peut se faire d'une extrémité à l'autre de la machine ou autrement, par exemple à partir d'un région médiane vers les régions d'extrémité.

La circulation du fluide de refroidissement peut être forcée à l'aide d'un ou plusieurs ventilateurs.

Les canaux peuvent ne pas être formés d'une seule pièce avec chaque tôle mais être formés en rapportant sur le paquet de tôles statoriques une ou plusieurs enveloppes, le paquet et/ou la ou les enveloppes comportant des ailettes, par exemple.

La fixation du paquet de tôles dans la carcasse peut se faire de diverses façons, avec par exemple une absence de barreaux et/ou des soudures du paquet de tôles à la carcasse à l'extérieur de celle-ci.

La machine peut comporter une bride avant et un flasque arrière reliés par des tubes filetés à leurs extrémités, passant au travers des canaux dans les extensions ou au travers d'espaces laissés libres entre la carcasse et le paquet de tôles statoriques.

L'expression « comportant un » doit être comprise comme étant synonyme de « comportant au moins un », sauf si le contraire est spécifié.

## Revendications

1. Stator de machine électrique tournante comportant une carcasse (50) et un paquet (10) de tôles statoriques disposé à l'intérieur de la carcasse, des sous-ensembles (60) de tôles du paquet comportant des extensions (24) parcourues par des canaux (26) de circulation d'un fluide de refroidissement avec une pluralité d'ailettes (27) par extension (24), les canaux (26) étant formés entre ces ailettes (27), ces sous-ensembles étant disposés de telle sorte que le fluide circulant le long du paquet subisse une succession de passages à l'intérieur des canaux (26) et de passages dans des zones élargies (100) s'étendant entre les canaux, le paquet de tôles étant agencé de telle sorte que, pour une extension (24) au moins, mieux la majorité, voire la totalité des extensions d'un sous-ensemble (60), la section de passage (sₑ) offerte à l'écoulement du fluide de refroidissement au sein de l'extension soit supérieure à celle (s_{I}) définie par l'espace (I) s'étendant radialement entre les extensions et la carcasse, **caractérisé par le fait qu'**au moins deux ailettes (27) entre lesquelles est formé l'un desdits canaux (26) sont reliées par une liaison périphérique (28) et **par le fait que** lesdits canaux (26) sont délimités par des bords radialement intérieurs (115 ; 116) situés à des distances différentes de l'axe du stator, les bords (115) situés angulairement en face des dents du stator étant plus rapprochés de l'axe que ceux (116) situés en face des encoches.

2. Stator selon la revendication 1, les canaux délimités radialement à l'intérieur par les bords (116) les plus éloignés de l'axe étant ouverts radialement vers la culasse, tandis que ceux délimités par les bords (115) les plus rapprochés de l'axe sont fermés radialement par des portions de tôle, notamment des liaisons périphériques (28) reliant des ailettes, de manière à avoir de préférence une section de passage offerte au fluide de refroidissement sensiblement égale pour deux canaux consécutifs d'une extension.

3. Stator selon l'une des revendications 1 et 2, le paquet de tôles comportant des encoches (130) qui viennent dans la continuité des bords des canaux radialement les plus rapprochés de l'axe, lors de la disposition en quinconce des sous-ensembles du paquet de tôles.

4. Stator selon l'une quelconque des revendications 1 à 3, avec s_{I ≤ 0,3} sₑ, mieux s_{I≤0,2} sₑ, de préférence s_{I≤0,1} sₑ, mieux s_{I} ≤ 0,05 sₑ, encore mieux s_{I} ≤ 0,01 sₑ.

5. Stator selon l'une quelconque des revendications 1 à 4, les extensions (24) des sous-ensembles (60) étant disposées en quinconce.

6. Stator selon l'une quelconque des revendications 1 à 5, ladite pluralité comportant au moins trois ailettes (27), notamment entre cinq et cinquante ailettes.

7. Stator selon l'une quelconque des revendications 1 à 6, toutes les ailettes entre lesquelles les canaux sont formés étant réunies par des liaisons périphériques (28) réalisées d'un seul tenant avec les ailettes.

8. Stator selon l'une quelconque des revendications précédentes, les tôles (20) du paquet (10) étant identiques.

9. Stator selon l'une quelconque des revendications précédentes, chaque sous-ensemble comportant plusieurs, notamment quatre, extensions (24).

10. Stator selon l'une quelconque des revendications précédentes, chaque extension (24) comportant une encoche (71) permettant le passage d'un barreau (30) de maintien des tôles du paquet,
l'encoche (71) accueillant au moins une ailette (72).

11. Stator selon l'une quelconque des revendications précédentes, chaque extension comportant, de part et d'autre des canaux (26), des ailettes libres, notamment au moins deux ailettes libres (75),
les ailettes libres (75) présentant une hauteur qui décroît en éloignement des canaux (26).

12. Stator selon l'une quelconque des revendications précédentes, la section de passage offerte au flux du fluide de refroidissement entre la carcasse et le stator étant supérieure ou égale à 60 % de la section qui existerait en l'absence des extensions.

13. Stator selon l'une quelconque des revendications précédentes, la dimension (*l*) suivant l'axe (X) de rotation de la machine d'un sous-ensemble étant comprise entre 2 et 20 fois le diamètre hydraulique des canaux.

## Claims

1. A stator for a rotary electric machine, the stator comprising a jacket (50) and a stack (10) of stator laminations placed inside the jacket, subassemblies (60) of laminations of the stack having extensions (24) with flow channels (26) for passing a cooling fluid therethrough, with a plurality of fins (27) in each extension (24), the channels (26) being formed between the fins (27), the subassemblies being disposed in such a manner that fluid flowing along the stack is subjected to a succession of passes within the channels (26) and of passes through wide zones (100) extending between the channels, the stack laminations being arranged in such a manner that for at least one extension (24), and better for the majority, or even all of the extensions of a subassembly (60), the flow section (sₑ) made available to the flow of cooling fluid within the extension is greater than the flow section (s_{I}) defined by the space (I) extending radially between the extensions and the jacket, **characterized by** the fact that at least two fins (27) between which one of said channels (26) is formed are connected together by a peripheral connection (28) and by the fact that said channels (26) are defined by radially inner edges (115; 116) that are situated at different distances from the axis of the stator, edges (115) that are situated angularly in register with teeth of the stator being closer to the axis than edges (116) that are situated in register with slots.

2. A stator according to claim 1, those channels that are defined radially inwards by the edges (116) further from the axis being radially open towards the jacket, while those that are defined by the edges (115) closer to the axis are closed radially by portions of lamination, in particular peripheral connections (28) interconnecting the fins, so as to obtain, preferably, a flow section made available to the cooling fluid that is substantially equal for two consecutive channels of an extension.

3. A stator according to claim 1 or claim 2, the stack of laminations comprising notches (130) that extend continuously from the radially inner edges of the channels when the subassemblies of the stack of laminations are disposed in a staggered configuration.

4. A stator according to any one of claims 1 to 3, where s_{I} ≤ 0.3sₑ, better s_{I} ≤ 0.2sₑ, preferably s_{I} ≤ 0.1sₑ, better s_{I} ≤ 0.05sₑ, better still sᵣ ≤ 0.01sₑ.

5. A stator according to any one of claims 1 to 4, the extensions (24) of the subassemblies (60) being disposed in a staggered configuration.

6. A stator according to any one of claims 1 to 5, said plurality comprising at least three fins (27), in particular five to 50 fins.

7. A stator according to any one of claims 1 to 6, all of the fins between which the channels are formed being connected together by peripheral connections (28) being made integrally with the fins.

8. A stator according to any preceding claim, the laminations (20) of the stack (10) being identical.

9. A stator according to any preceding claim, each subassembly having a plurality of extensions (24), in particular four extensions.

10. A stator according to any preceding claim, each extension (24) comprising a slot (71) for passing a bar (30) for holding the laminations of the stack together, the slot (71) receiving at least one fin (72).

11. A stator according to any preceding claim, each extension comprising free fins on either side of the channels (26), in particular at least two free fins (75), the free fins (75) presenting a height that decreases on going away from the channels (26).

12. A stator according to any preceding claim, the flow section made available to the flow of cooling fluid between the jacket and the stator being greater than or equal to 60% of the section that would exist in the absence of the extensions.

13. A stator according to any preceding claim, the dimension (ℓ) of a subassembly along the axis (X) of rotation of the machine lying in the range 2 to 20 times the hydraulic diameter of the channels.

## Patentansprüche

1. Stator einer elektrischen Drehmaschine mit einem Gehäuse (50) und einem Bündel (10) von Statorblechen, die im Inneren des Gehäuses angeordnet sind, wobei Teilmengen (60) der Bleche des Bündels Erweiterungen (24) aufweisen, die von Kanälen (26) eines Kühlmittelkreislaufs mit mehreren Stegen (27) pro Erweiterung (24) durchlaufen werden, wobei die Kanäle (26) zwischen den Stegen (27) gebildet sind, wobei die Teilmengen so angeordnet sind, dass das über die Länge des Bündels strömende Mittel eine Abfolge von Passagen im Inneren der Kanäle (26) und von Passagen in erweiterten Bereichen (100), die sich zwischen den Kanälen erstrecken, durchläuft, wobei das Bündel von Blechen so ausgelegt ist, dass bei mindestens einer Erweiterung (24), besser bei der Mehrheit oder sogar allen Erweiterungen einer Teilmenge (60), der für den Durchlauf des Kühlmittels offenstehende Passagenquerschnitt (sₑ) im Inneren der Erweiterung größer als der (s_{I}) ist, der durch den sich in radialer Richtung zwischen den Erweiterungen und dem Gehäuse erstreckenden Zwischenraum (I) definiert ist, **gekennzeichnet dadurch, dass** mindestens zwei Stege (27), zwischen denen einer der Kanäle (26) gebildet ist, durch eine Randverbindung (28) miteinander verbunden sind und dass die Kanäle (26) durch in radialer Richtung innere Kanten (115; 116) begrenzt sind, die in unterschiedlichen Abständen von der Statorachse angeordnet sind, wobei die winkelweise gegenüber von Zähnen des Stators angeordneten Kanten (115) näher an der Achse liegen als die gegenüber von Vertiefungen angeordneten (116).

2. Stator nach Anspruch 1, wobei die in radialer Richtung im Inneren durch von der Achse entferntere Kanten (116) begrenzten Kanäle in radialer Richtung zum Verschluss hin offen sind, während die durch näher an der Achse liegende Kanten (115) begrenzten in radialer Richtung durch Blechabschnitte, insbesondere durch die die Stege verbindenden Randverbindungen (28), verschlossen sind, so dass vorzugsweise ein für das Kühlmittel offenstehender Passagenquerschnitt für zwei aufeinander folgende Kanäle einer Erweiterung im Wesentlichen gleich ist.

3. Stator nach einem der Ansprüche 1 und 2, wobei das Bündel von Blechen Vertiefungen (130) aufweist, die entlang des Verlaufs von in radialer Richtung näher an der Achse liegenden Kanälen bei versetzter Anordnung der Teilmengen des Bündels von Blechen vorkommen.

4. Stator nach einem der Ansprüche 1 bis 3, wobei s_{I} ≤ 0,3 sₑ, besser s_{I} ≤ 0,2 sₑ, vorzugsweise s_{I} ≤ 0,1 sₑ, besser s_{I} ≤ 0,05 sₑ, noch besser s_{I} ≤ 0,01 sₑ.

5. Stator nach einem der Ansprüche 1 bis 4, wobei die Erweiterungen (24) von Teilmengen (60) versetzt zueinander angeordnet sind.

6. Stator nach einem der Ansprüche 1 bis 5, wobei die mehreren Stege mindestens drei Stege (27), insbesondere zwischen 5 und 50 Stege, aufweisen.

7. Stator nach einem der Ansprüche 1 bis 6, wobei alle Stege, zwischen denen die Kanäle gebildet sind, durch Randverbindungen (28) vereinigt sind, die aus einem Stück mit den Stegen gemacht sind.

8. Stator nach einem der vorhergehenden Ansprüche, wobei die Bleche (20) des Pakets (10) identisch sind.

9. Stator nach einem der vorhergehenden Ansprüche, wobei jede Teilmenge mehrere, insbesondere vier, Erweiterungen (24) aufweist.

10. Stator nach einem der vorhergehenden Ansprüche, wobei jede Erweiterung (24) eine Vertiefung (71) aufweist, die das Durchstecken einer Wartungsstange (30) der Bleche des Pakets erlaubt, wobei die Vertiefung (71) mindestens einen Steg (72) aufnimmt.

11. Stator nach einem der vorhergehenden Ansprüche, wobei jede Erweiterung, auf beiden Seiten der Kanäle (26), freie Stege, insbesondere mindestens zwei freie Stege (75), aufweist, wobei die freien Stege (75) eine Höhe haben, die entlang der Länge der Kanäle (26) abnimmt.

12. Stator nach einem der vorhergehenden Ansprüche, wobei der für die Kühlmittelströmung offenstehende Passagenquerschnitt zwischen dem Gehäuse und dem Stator größer oder gleich 60% des Querschnitts, der ohne die Erweiterungen bestehen würde, ist.

13. Stator nach einem der vorhergehenden Ansprüche, wobei die Abmessung (1) entlang der Rotationsachse (X) der Maschine zwischen dem doppelten und dem 20-fachen des hydraulischen Durchmessers der Kanäle liegt.
